# FASCICULE DE BREVET EUROPEEN

(11) **EP 1 549 480 B1**
(45) Date de publication et mention de la délivrance du brevet: **06.09.2006**
(21) Numéro de dépôt: 03761626.5
(22) Date de dépôt: 23.06.2003
(51) Int. Cl.: B29C 49/54, B29C 49/56, B29C 49/36

(54) **DISPOSITIF DE MOULAGE, PAR SOUFFLAGE OU ETIRAGE-SOUFFLAGE, DE RECIPIENTS EN MATIERE THERMOPLASTIQUE**
VORRICHTUNG ZUM BLASFORMEN ODER STRECKBLASFORMEN VON BEHÄLTERN AUS THERMOPLASTISCHEM MATERIAL
DEVICE FOR BLOW-MOULDING OR STRETCH BLOW-MOULDING OF THERMOPLASTIC MATERIAL CONTAINERS

(30) Priorité: 27.06.2002 FR 0208005
(43) Date de publication de la demande: 06.07.2005
(73) Titulaire: SIDEL PARTICIPATIONS, 76930 Octeville-sur-Mer (FR)
(72) Inventeur: ARAKELYAN, Vigen, 76930 Octeville sur Mer (FR)
(74) Mandataire: Gorrée, Jean-Michel
(86) Numéro de dépôt international: PCT/FR2003/001918
(87) Numéro de publication internationale: WO 2004/002716

(56) Documents cités:
- EP-A- 0 456 866
- EP-A- 0 599 778
- US-A- 3 267 184
- US-A- 3 856 450
- US-A- 4 290 745

## Description

La présente invention concerne des perfectionnements apportés aux dispositifs de moulage de récipients à partir de préformes en matériau thermoplastique par soufflage ou étirage-soufflage, lesdits dispositifs comportant un moule en trois parties, à savoir deux demi-moules pour le corps du récipient et un fond de moule pour le fond du récipient, les parties inférieures des deux demi-moules et la partie supérieure du fond de moule comportant des moyens mutuellement emboîtables, dans la position de fermeture du moule, pour assurer la rigidité axiale du moule en présence de la pression de soufflage, les deux demi-moules étant agencés pour être déplacés l'un par rapport à l'autre, entre une position d'ouverture et une position de fermeture, sous l'action de moyens d'actionnement commandés par une came fixe, ce dispositif comportant des moyens de liaison entre au moins un demi-moule et/ou lesdits moyens d'actionnement desdits demi-moules, d'un côté, et le fond de moule, de l'autre côté, de manière que le déplacement du fond de moule soit commandé par le déplacement d'au moins un demi-moule et/ou lesdits moyens d'actionnement de telle façon que :
- lors de l'ouverture du moule, lesdits moyens d'actionnement provoquent le début du déplacement d'écartement mutuel desdits demi-moules jusqu'à ce que lesdits moyens mutuellement emboîtables soient libérés l'un de l'autre, tandis que lesdits moyens de liaison demeurent inopérants et que le fond de moule reste dans sa position, puis que, tandis que lesdits moyens d'actionnement continuent à provoquer la poursuite de l'écartement mutuel des deux demi-moules, les moyens de liaison deviennent fonctionnels et provoquent le déplacement du fond de moule pour l'écarter axialement desdits demi-moules,
   et que
- lors de la fermeture du moule, lesdits moyens d'actionnement provoquent le début du rapprochement des deux demi-moules en même temps que lesdits moyens de liaison commandent le déplacement axial du fond de moule jusqu'à sa position entièrement relevée, puis que, lesdits moyens de liaison devenant inopérants, lesdits moyens d'actionnement finissent de provoquer le rapprochement des deux demi-moules l'un contre l'autre avec venue en prise des moyens emboîtables solidarisant mécaniquement axialement les deux demi-moules et le fond de moule.

Pour le moulage par soufflage ou étirage-soufflage de récipients tels que des bouteilles à partir de préformes chauffées en matière thermoplastique telle que le PET, il est connu d'utiliser des moules constitués de deux demi-moules mobiles l'un par rapport à l'autre entre une position d'ouverture (chargement/déchargement du moule) et une position de fermeture (soufflage ou étirage/soufflage). En particulier, il est connu d'agencer les deux demi-moules de manière qu'ils soient rotatifs l'un par rapport à l'autre (moules portefeuille). De nombreuses réalisations de tels moules, avec leurs moyens de fermeture et leurs moyens de verrouillage en position fermée, sont connues (voir par exemple EP 0 456 866, US 3 267 184, US 3 856 450, FR 2 646 802, FR 2 653 058, FR 2 659 265, FR 2 681 552, FR 2 733 176, FR 2 793 722, tous au nom de la Demanderesse).

La constitution du moule en seulement deux demi-moules est possible lorsque le récipient à fabriquer possède une forme relativement simple et est facilement extractible du moule. C'est le cas notamment lorsque le fond du récipient ne présente pas de reliefs prononcés (fond hémisphérique ou fond plat par exemple).

L'actionnement des deux demi-moules à la fermeture et à l'ouverture est commandé mécaniquement, à l'aide d'un galet, solidaire des demi-moules par des moyens de transmission, qui coopère avec une came disposée latéralement et présentant le profil requis. Fréquemment, il s'agit d'un ensemble de plusieurs moules montés sur un support commun tournant (carrousel) et la came est montée fixe latéralement.

Par contre, lorsque, comme cela se présente dans la majorité des cas, le fond présente une conformation complexe (fond pétaloide ou fond bombé à convexité tournée vers l'intérieur, par exemple), le récipient ne peut pas être extrait, sans déformation et donc sans endommagement, d'un moule en deux parties. C'est la raison pour laquelle on a recours, pour la fabrication de tels récipients à fond de forme complexe, à des moules en trois parties, comprenant deux demi-moules écartables/rapprochables l'un de l'autre (notamment articulés en rotation) pour le moulage du corps du récipient et un fond de moule déplaçable axialement pour le moulage du fond du récipient.

De façon classique alors, l'actionnement du fond de moule est dévolu à des moyens spécifiques, équipés de leur propre galet coopérant avec une came distincte.

Il faut en outre souligner que, pour renforcer mécaniquement le moule lorsqu'il est soumis à la pression de soufflage, on a prévu une solidarisation mécanique des deux demi-moules et du fond de moule dans la position de fermeture du moule. A cet effet, la partie inférieure des deux demi-moules et la partie supérieure du fond de moule sont à recouvrement mutuel et sont équipées de moyens mutuellement emboîtables, tels que par exemple gorge périphérique/saillie périphérique par exemple sous forme d'une saillie annulaire s'emboîtant dans la gorge. Il en résulte que le déplacement axial du fond de moule ne peut avoir lieu que lorsque les deux demi-moules sont dans une position suffisamment entrouverte pour laquelle les moyens mutuellement emboîtés sont dégagés. Il est donc nécessaire que les déplacements des demi-moules et du fond de moule aient lieu selon une séquence bien précise.

Ces exigences entraînent la nécessité d'un positionnement relatif rigoureux des deux cames commandant respectivement les mouvements des demi-moules et du fond de moule, avec la mise en oeuvre de moyens de réglage pour assurer la précision requise de ce positionnement relatif.

En définitive, la conception actuelle des dispositifs de moulage avec moule en trois parties, faisant appel à deux cames commandant les déplacements des demi-moules et du fond de moule respectivement, se révèle complexe et encombrante par la présence des double moyens d'actionnement, et coûteuse à mettre en place et à entretenir pour assurer le positionnement mutuel correct des deux cames dont est tributaire le parfait synchronisme des mouvements des trois parties constitutives du moule.

A cela il faut ajouter les problèmes engendrés, dans les installations tournantes à moules multiples, par l'entrée en contact des galets avec les cames fixes montées latéralement et par les phénomènes de rebond qui en découlent et qui sont générateurs de vibrations importantes. Or, dans un agencement actuel de moule en trois parties, ce sont au moins deux galets qui entrent en contact avec deux cames respectives pour chaque moule, ce qui entraîne un cumul des phénomènes vibratoires.

La recherche de vitesse de fonctionnement toujours plus élevée, conduisant à des cadences de production toujours plus importantes, conduit, d'une part, à rechercher une simplification structurelle permettant de réduire les inerties et, d'autre part, à réduire de la façon la plus complète possible les phénomènes vibratoires accompagnant l'entrée en contact des galets avec la came correspondante.

C'est dans cette optique que l'invention propose de perfectionner le dispositif de moulage exposé au préambule, lequel, étant agencé conformément à l'invention, se caractérise en ce que les moyens de liaison comprennent une bielle de liaison dont les extrémités sont munies de moyens d'accouplement à trois degrés de liberté en rotation pour sa liaison au demi-moule et/ou auxdits moyens d'actionnement desdits moules et pour sa liaison au fond de moule, respectivement, et en ce que la liaison de la bielle avec le fond de moule est agencée pour, lors de l'ouverture du moule, pivoter librement sous l'entraînement du susdit demi-moule et/ou desdits moyens d'actionnement desdits demi-moules tandis que les deux demi-moules s'entrouvrent jusqu'à une valeur angulaire prédéterminée, puis venir en appui contre une butée solidaire du fond de moule lorsque les demi-moules s'entrouvrent sous ladite valeur angulaire et/ou lorsque lesdits moyens d'actionnement sont dans une position pour laquelle les demi-moules s'entrouvrent sous ladite valeur angulaire, et enfin repousser axialement le fond de moule lorsque les deux demi-moules achèvent leur parcours d'ouverture, et inversement lors de la fermeture du moule.

De façon préférée, car il semble que la mise en oeuvre soit la plus simple, on prévoit que lesdits moyens de liaison soient interposés entre un des demi-moules et le fond de moule. En particulier, lorsque chaque demi-moule est constitué par une demi-unité porté-moule supportant de façon amovible un bloc métallique dans lequel est usinée une demi-cavité du corps de récipient, il est préférable que les moyens de liaison soient interposés entre une unité porte-moule et le fond de moule. De même, lorsque le fond de moule comporte un bloc interchangeable en fonction de la forme du récipient, lequel bloc est rendu solidaire d'une structure porteuse, il est alors préférable que les moyens de liaison soient interposés entre un des demi-moules (respectivement une des unités porte-moules) et la structure porteuse.

Grâce à ces dispositions, on élimine les moyens indépendants d'actionnement du fond de moule, ce qui, d'une part, simplifie l'architecture d'ensemble de la machine et, d'autre part et surtout, évite les réglages longs et minutieux requis pour le positionnement mutuel correct des deux cames. Au surplus, chaque moule constitue maintenant une unité fonctionnelle complète qui est montée et installée en tant que telle et qui n'est associée qu'à une seule source de mouvement constituée par la came unique. Enfin, et cet avantage n'est pas le moindre, l'élimination de la commande indépendante du fond de moule avec sa came propre permet de réduire considérablement les problèmes vibratoires mentionnés plus haut. Il devient alors possible d'envisager de faire fonctionner un tel dispositif à des vitesses sensiblement plus élevées que celles pratiquées jusqu'à maintenant.

De façon simple, les susdits moyens d'accouplement à trois degrés de liberté en rotation sont de préférence des accouplements à rotule sphérique, ou comprennent, pour l'un, un accouplement à rotule sphérique et, pour l'autre, un accouplement à cardan.

Dans un exemple de réalisation simple, l'extrémité inférieure de la bielle est liée par ledit accouplement à rotule sphérique avec une biellette articulée en rotation sur un bras radial solidaire du fond de moule, ladite butée étant constituée par une portion dudit bras.

Bien que diverses configurations puissent être envisagées, il est cependant avantageux de faire en sorte que la biellette soit articulée sur le bras radial par un axe perpendiculaire à l'axe du moule ; on peut notamment alors prévoir que la biellette soit réalisée sous forme d'un sabot massif auquel est lié l'accouplement respectif.

Avantageusement, des moyens de rappel élastique sont accouplés au fond de moule pour aider au déplacement axial du fond de moule depuis sa position d'ouverture jusqu'à sa position de fermeture.

Grâce aux dispositions conformes à l'invention, on peut constituer une structure simple ne mettant en oeuvre qu'un petit nombre de pièces composantes parmi lesquelles ne figurent pas de pièces frottantes, ce qui évite l'usure et écarte l'apparition de jeux. Les efforts transmis sont relativement peu importants et les masses relativement faibles des pièces en mouvement conduisent à des inerties peu élevées : un tel mécanisme est donc susceptible de fonctionner à des vitesses élevées, ce qui permet d'envisager une élévation des vitesses de fonctionnement de l'installation de moulage.

La constitution de la biellette mobile sous forme d'un sabot massif conduit à une structure mécaniquement résistante capable d'encaisser sans déformation les chocs de butée marquant la transition entre le mouvement des demi-moules seul et le mouvement des demi-moules accompagné du déplacement axial du fond de moule.

Enfin, bien que l'axe d'articulation de la biellette, respectivement du sabot, soit avantageusement perpendiculaire à l'axe du moule, la position de cet axe est, à vrai dire, indifférente : il en résulte que le positionnement du bras radial n'a pas à être d'une très grande précision, ce qui simplifie la construction.

Les dispositions de l'invention trouvent une application préférée, bien que non exclusive, dans les dispositifs de moulage à moule du type portefeuille dans lequel les deux demi-moules sont mutuellement pivotants.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :
- la figure 1 est une vue schématique simplifiée, en coupe axiale, d'un moule en trois parties visé par l'invention ;
- Les figures 2A à 2C montrent, en vue perspective, un des demi-moules de la figure 1 équipé conformément à l'invention respectivement dans trois positions fonctionnelles différentes ;
- la figure 3 est une vue en perspective illustrant une variante des dispositions montrées aux figures 2A à 2C ; et
- la figure 4 est une vue en perspective illustrant une variante des dispositions montrées à la figure 3.

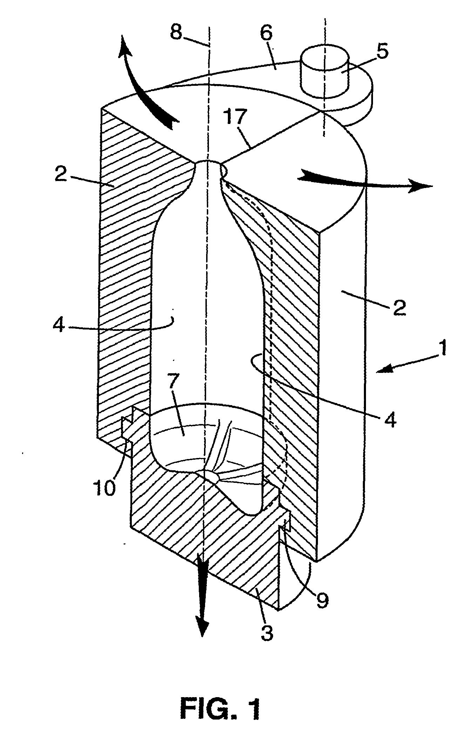

En se reportant tout d'abord à la figure 1, l'invention vise à perfectionner les dispositifs de moulage de récipients à partir de préformes en matériau thermoplastique tel que le PET par soufflage ou étirage-soufflage, qui comportent un moule 1 en trois parties, à savoir deux demi-moules 2 et un fond de moule 3.

Les deux demi-moules 2 comportent chacun une empreinte 4 de la moitié du corps du récipient à fabriquer (par exemple une bouteille) et sont écartables ou rapprochables l'un de l'autre transversalement. Dans l'exemple illustré, les deux demi-moules sont agencés avec des oreilles extérieures 6 de manière à être montés sur un axe 5 commun et à pouvoir être fermés ou ouverts par rotation autour de cet axe (moule portefeuille). Dans le cas où les demi-moules comprennent des unités porte-moules respectives, les oreilles 6 sont ménagées sur ces dernières. Mais les perfectionnements apportés par l'invention qui seront exposés plus loin peuvent cependant être mis en oeuvre avec des moules d'agencement différent, par exemple avec des demi-moules mobiles par translation transversale.

Traditionnellement, la commande d'ouverture et de fermeture des demi-moules 2 est assurée mécaniquement, par des moyens à bras articulés entraînés par un galet coopérant avec une came fixe. De tels moyens, non montrés à la figure 1, sont décrits et illustrés par exemple dans les documents FR 2 653 058, FR 2 681 552 ou FR 2 793 722.

Le fond de moule 3, troisième partie du moule 1, comporte l'empreinte 7 de forme complexe du fond du récipient à fabriquer et est déplaçable axialement selon l'axe 8 du moule (axe du récipient à fabriquer).

Pour assurer un assemblage mécanique du fond de moule 7 avec les deux demi-moules, en position de fermeture du moule, qui soit capable de supporter les efforts engendrés par la pression élevée du soufflage (par exemple 40 x 10⁵ Pa), on prévoit une solidarisation par des moyens mutuellement emboîtables, tels que gorge/saillie. Dans l'exemple illustré à la figure 1, le fond de moule 3 comporte une saillie 9 radiale s'étendant sur tout ou partie de la périphérie latérale du fond de moule, dans la partie supérieure de celui-ci coiffée par les parties inférieures des demi-moules 2 ; de leur côté les demi-moules 2 sont munis chacun d'une gorge 10 en correspondance.

Dans une telle configuration, il est nécessaire, pour ouvrir le moule, de commencer l'ouverture des demi-moules 2 seuls, le fond de moule 3 restant en place, jusqu'à ce que les gorges 10 aient libéré la saillie 9 ; puis alors, et seulement alors, le fond de moule 3 peut être déplacé axialement tandis que les demi-moules 2 achèvent leurs mouvements respectifs. Pour la fermeture du moule, il faut, inversement, ramener le fond de moule 3 axialement pendant que les demi-moules 2 amorcent leur mouvement de rapprochement, de sorte que le fond de moule 3 soit en place pendant que les deux demi-moules 2 achèvent leur mouvement de rapprochement et que les gorges 10 coiffent la saillie 9.

Pour écarter la commande spécifique à galet et came fixe utilisée jusqu'à présent pour déplacer le fond de moule 3 et éviter les difficultés entraînées par les réglages de positionnement mutuel des deux cames de commande des demi-moules 2 et du fond de moule 3, respectivement, afin d'obtenir la synchronisation parfaite des mouvements décrits plus haut, on prévoit des moyens de liaison entre au moins un demi-moule et/ou lesdits moyens d'actionnement des demi-moules 2, d'un côté, et le fond de moule 3, de l'autre côté, de manière que soient conservées les séquences de déplacements synchronisés, exposées plus haut, des demi-moules 2 et du fond de moule 3 aussi bien à l'ouverture qu'à la fermeture du moule.

Conformément à l'invention, on prévoit que les moyens de liaison comprennent une bielle de liaison 13 dont les extrémités sont munies de moyens d'accouplement à trois degrés de liberté en rotation pour sa liaison au demi-moule et/ou auxdits moyens d'actionnement desdits demi-moules et pour sa liaison au fond de moule, respectivement, et la liaison de la bielle 13 avec le fond de moule 3 est agencée pour, lors de l'ouverture du moule, pivoter librement sous l'entraînement du susdit demi-moule et/ou desdits moyens d'actionnement desdits demi-moules tandis que les deux demi-moules s'entrouvrent jusqu'à une valeur angulaire α prédéterminée, puis venir en appui contre une butée solidaire du fond de moule 3 lorsque les demi-moules 2 s'entrouvrent sous ladite valeur angulaire α et/ou lorsque lesdits moyens d'actionnement sont dans une position pour laquelle les demi-moulés s'entrouvrent sous ladite valeur angulaire α, et enfin repousser axialement le fond de moule 3 lorsque les deux demi-moules 2 achèvent leur parcours d'ouverture, et inversement lors de la fermeture du moule.

Un mode de réalisation simple consiste à interposer lesdits moyens de liaison entre un des demi-moules et le fond de moule, et à les agencer par exemple de la façon suivante.

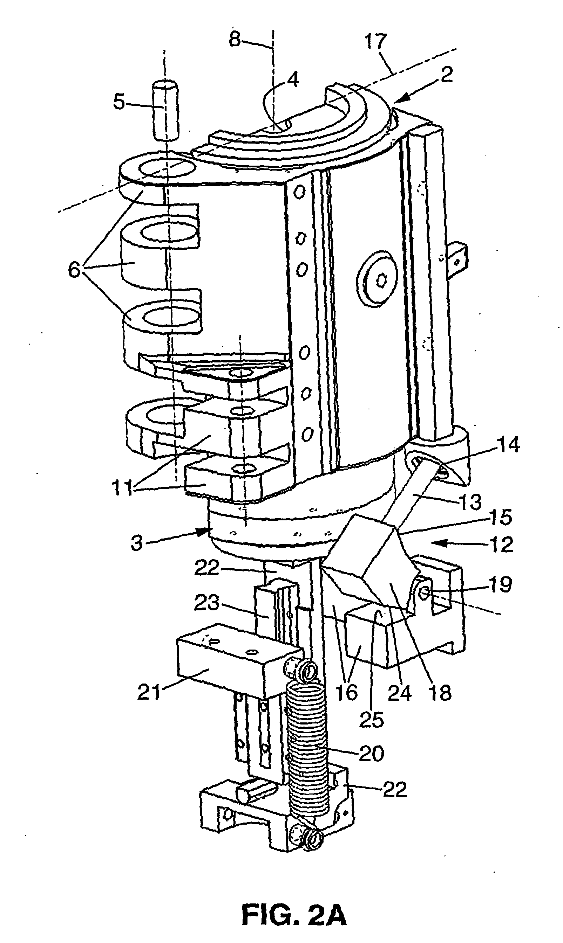

A la figure 2A est montrée une vue extérieure de l'un des demi-moules 2 (on aperçoit les oreilles 11 sur lesquelles sont articulés les bras - non montrés - d'actionnement entraînés par le galet déplacé par la came fixe dont question plus haut).

Les moyens de liaison 12 interposés entre le demi-moule 2 et le fond de moule 3 comprennent une bielle de liaison 13 munie à ses deux extrémités de rotules sphériques pour constituer respectivement un accouplement 14 avec le demi-moule 2 et un accouplement 15 avec le fond de moule 3.

De préférence, les deux accouplements 14, 15 sont des accouplements à rotule. Eventuellement, l'une des rotules peut être remplacée par un cardan ; alternativement, l'un et/ou l'autre de ces accouplements peut être remplacé par tout dispositif procurant les trois degrés de liberté requis pour réaliser les séquences susmentionnées.

L'accouplement 14 est situé sur la paroi externe du demi-moule 2, en un emplacement de celle-ci relativement éloigné de l'axe 5 de rotation de manière à bénéficier d'une amplitude suffisante de déplacement.

L'accouplement 15 est avantageusement prévu non pas sur le fond de moule lui-même, mais sur l'extrémité d'un bras 16 d'étendue radiale, solidaire du fond de moule 3, de manière que la bielle 13 s'étende approximativement parallèlement à la face de contact 17 (plan de joint) du demi-moule 2.

Pour assurer la décomposition séquentielle des mouvements indiqués plus haut, l'accouplement 15 est solidaire d'une pièce mobile ou biellette 18 qui, dans l'exemple illustré à la figure 2A, est réalisée sous forme d'un sabot massif abritant le logement sphérique recevant la rotule sphérique solidaire de la bielle 13. Le sabot 18 est articulé à rotation sur l'extrémité du bras 16 par un axe 19 qui, dans l'exemple illustré, est sensiblement perpendiculaire à l'axe 8 du moule (ou à son axe 5 de pivotement).

Par ailleurs des moyens de rappel élastique (ressort 20) sont associés au fond de moule 3 pour rappeler celui-ci en position de fermeture. A la figure 2A, le ressort 20 est interposé entre une partie de bâti 21 du dispositif de moulage et une glissière 22 solidaire du fond de moule 3 et coopérant avec un guide 23 fixe pour guider le fond de moule 3 dans son déplacement axial.

La figure 2A montre le demi-moule 2 et le fond de moule 3 en position de fermeture (position illustrée également à la figure 1).

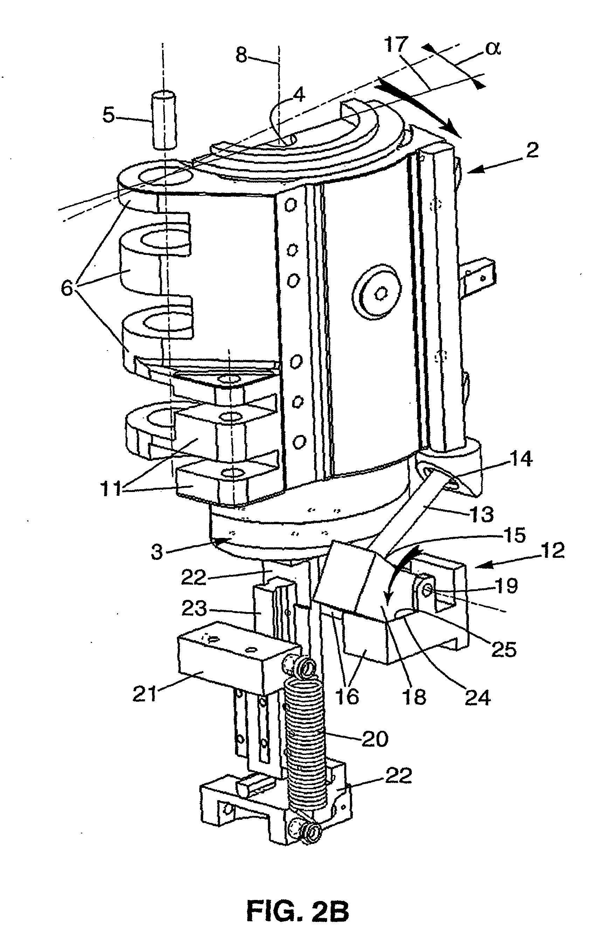

Lorsqu'on commence à ouvrir les demi-moules 2 en les faisant pivoter autour de leur axe 5, l'un de ces demi-moules entraîne, par l'intermédiaire de la bielle 13, le sabot 18 dans une rotation autour de son axe 19 comme illustré à la figure 2B. Toutefois, la liaison articulée entre le sabot 18 et le bras 16 est agencée de telle manière (par exemple, comme illustré, l'axe 19 est surélevé par rapport au bras et le sabot 18 possède une face inférieure présentant un pan coupé 24) que le sabot 18 peut tourner librement.

Par conséquent, au cours de cette phase de mouvement des demi-moules 2, le fond de moule 3 n'est soumis à aucun effort d'entraînement et il demeure dans sa position de fermeture, maintenu par le ressort 20.

Lorsque les deux demi-moules 2 ont parcouru une plage angulaire prédéterminée α (figure 2B), on est assuré que les gorges 10 ont dégagé la saillie 9. A ce moment, la face 24 du sabot 18 entre en contact avec une surface d'appui 25, formant butée, du bras 16, comme illustré à la figure 2B.

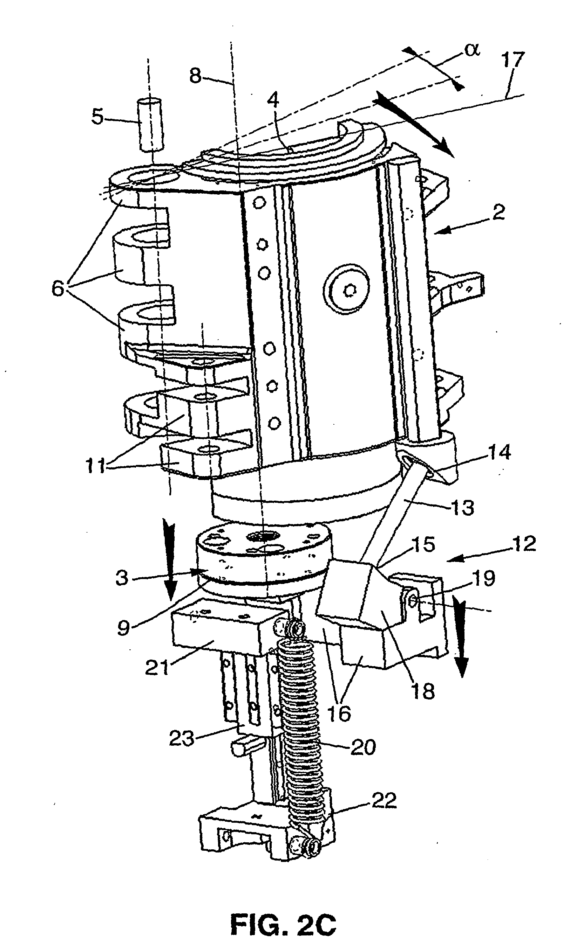

A partir de ce moment, le sabot 18 continue à être repoussé par la bielle 13, mais ne peut plus basculer par rapport au bras 16. L'ensemble formé par la bielle et le sabot constitue alors une jambe de force en appui sur le bras 16, qui exerce sur celui-ci une composante d'effort dirigée vers le bas. Le fond de moule 3 est ainsi entraîné axialement dans le sens de l'ouverture comme illustré à la figure 2C.

En sens inverse, pour la fermeture du moule, le demi-moule 2 entraîne, par l'intermédiaire de la bielle 13, le fond de moule 3 qui parvient dans sa position relevée lorsque le demi-moule 2 a encore une plage angulaire α à parcourir. A ce moment, le sabot 18 quitte son appui sur la butée 25 du bras 16 et, le fond de moule 3 étant alors désolidarisé cinématiquement du demi-moule 2, celui-ci achève seul son parcours de fermeture, avec sa gorge 10 venant coiffer la saillie 9 du fond de moule. Au cours de la première phase du mouvement, l'effort de rappel que le ressort 20 exerce sur le fond de moule 3 pour tendre à faire remonter celui-ci vers sa position relevée de fermeture du moule maintient la butée 25 du bras 16 au contact du sabot 18, de sorte que le fond de moule 3 accompagne le mouvement du demi-moule 2.

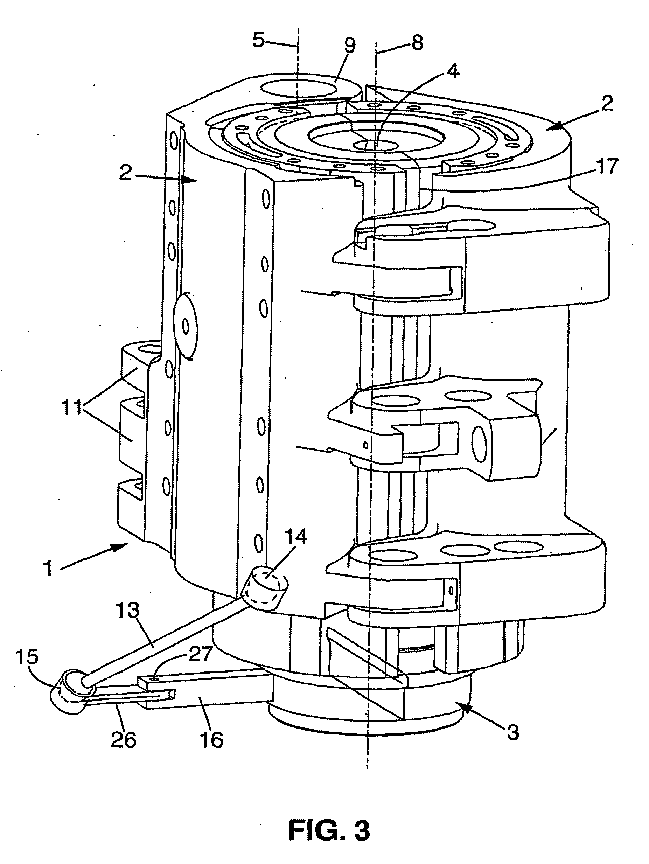

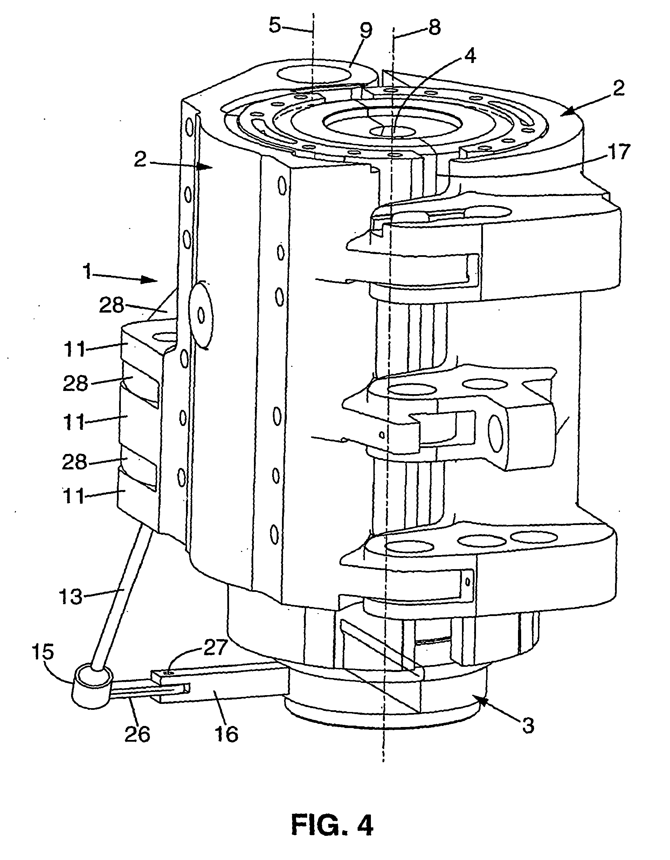

Bien entendu, de nombreuses variantes sont envisageables. On soulignera en particulier que la position de l'axe 19 de rotation du sabot 18 est indifférente, ce qui offre l'avantage que le positionnement du bras 16, lors de la fabrication, n'a pas à être d'une grande précision. A titre d'exemple, on a illustré à la figure 3 (sur laquelle le moule 1 est montré dans son ensemble, en perspective, sous un angle de vue différent) l'accouplement 15 monté à l'extrémité d'une biellette allongée 26, elle-même raccordée à son autre extrémité, de façon rotative par un axe 27 approximativement parallèle à l'axe 8 du moule, au bras 16 solidaire du fond de moule 3. De même, à la figure 4, on a illustré un autre mode de réalisation calqué sur celui de la figure 3 et dans lequel la bielle de liaison 13, constituant les susdits moyens de liaison, est interposée entre la biellette 26 et un bras 28 (visible en partie seulement) connecté à rotation sur les oreilles 11 (l'accouplement 14 avec le bras 28 étant caché).

## Revendications

1. Dispositif de moulage de récipients à partir de préformes en matériau thermoplastique par soufflage ou étirage-soufflage, ledit dispositif comportant un moule (1) en trois parties, à savoir deux demi-moules (2) pour le corps du récipient et un fond de moule (3) pour le fond du récipient, les parties inférieures des deux demi-moules (2) et la partie supérieure du fond de moule (3) comportant des moyens (9, 10) mutuellement emboîtables, dans la position de fermeture du moule, pour assurer la rigidité axiale du moule en présence de la pression de soufflage, les deux demi-moules (2) étant agencés pour être déplacés l'un par rapport à l'autre, entre une position d'ouverture et une position de fermeture, sous l'action de moyens d'actionnement commandés par une came fixe, ce dispositif comportant des moyens de liaison entre au moins un demi-moule (2) et/ou lesdits moyens d'actionnement desdits demi-moules, d'un côté, et le fond de moule (3), de l'autre côté, de manière que le déplacement du fond de moule (3) soit commandé par le déplacement d'au moins un demi-moule (2) et/ou lesdits moyens d'actionnement de telle façon que :
- lors de l'ouverture du moule, lesdits moyens d'actionnement provoquent le début du déplacement d'écartement mutuel desdits demi-moules jusqu'à ce que lesdits moyens (9, 10) mutuellement emboîtables soient libérés l'un de l'autre, tandis que lesdits moyens de liaison demeurent inopérants et que le fond de moule reste dans sa position, puis que, tandis que lesdits moyens d'actionnement continuent à provoquer la poursuite de l'écartement mutuel des deux demi-moules, les moyens de liaison deviennent fonctionnels et provoquent le déplacement du fond de moule pour l'écarter axialement.desdits demi-moules,
et que
- lors de la fermeture du moule, lesdits moyens d'actionnement provoquent le début du rapprochement des deux demi-moules en même temps que lesdits moyens de liaison commandent le déplacement axial du fond de moule jusqu'à sa position entièrement relevée, puis que, lesdits moyens de liaison devenant inopérants, lesdits moyens d'actionnement finissent de provoquer le rapprochement des deux demi-moules l'un contre l'autre avec venue en prise des moyens emboîtables solidarisant mécaniquement axialement les deux demi-moules et le fond de moule,
**caractérisé en ce que** les moyens de liaison comprennent une bielle de liaison (13) dont les extrémités sont munies de moyens d'accouplement à trois degrés de liberté en rotation pour sa liaison au demi-moule et/ou auxdits moyens d'actionnement desdits demi-moules et pour sa liaison au fond de moule, respectivement,
et **en ce que** la liaison de la bielle (13) avec le fond de moule (3) est agencée pour, lors de l'ouverture du moule, pivoter librement sous l'entraînement du susdit demi-moule et/ou desdits moyens d'actionnement desdits demi-moules tandis que les deux demi-moules s'entrouvrent jusqu'à une valeur angulaire (α) prédéterminée, puis venir en appui contre une butée solidaire du fond de moule (3) lorsque les demi-moules (2) s'entrouvrent sous ladite valeur angulaire (α) et/ou lorsque lesdits moyens d'actionnement sont dans une position pour laquelle les demi-moules s'entrouvrent sous ladite valeur angulaire (α), et enfin repousser axialement le fond de moule (3) lorsque les deux demi-moules (2) achèvent leur parcours d'ouverture, et inversement lors de la fermeture du moule.

2. Dispositif de moulage selon la revendication 1, **caractérisé en ce que** lesdits moyens de liaison sont interposés entre un des demi-moules (2) et le fond de moule (3).

3. Dispositif de moulage selon la revendication 1 ou 2, **caractérisé en ce que** les moyens d'accouplement à trois degrés de liberté en rotation sont des accouplements (14, 15) à rotule sphérique.

4. Dispositif de moulage selon la revendication 1 ou 2, **caractérisé en ce que** les moyens d'accouplement à trois degrés de liberté comprennent, pour l'un, un accouplement à rotule sphérique et, pour l'autre, un accouplement à cardan.

5. Dispositif de moulage selon la revendication 3 ou 4, **caractérisé en ce que** l'extrémité inférieure de la bielle (13) est liée par l'accouplement (15) respectif avec une biellette (18) articulée en rotation sur un bras radial (16) solidaire du fond de moule, ladite butée étant constituée par une portion (25) dudit bras (16).

6. Dispositif de moulage selon la revendication 5, **caractérisé en ce que** la biellette (18) est articulée sur le bras radial (16) par un axe (19) perpendiculaire à l'axe du moule.

7. Dispositif de moulage selon la revendication 5 ou 6, **caractérisé en ce que** la biellette (18) est réalisée sous forme d'un sabot massif auquel est lié l'accouplement (15) correspondant.

8. Dispositif de moulage selon l'une quelconque des revendications 1 à 7, **caractérisé en ce que** des moyens (20) de rappel élastique sont accouplés au fond de moule (3) pour aider au déplacement axial du fond de moule depuis sa position d'ouverture jusqu'à sa position de fermeture.

9. Dispositif de moulage selon l'une quelconque des revendications 1 à 8, **caractérisé en ce que** le moule (1) est du type portefeuille avec les deux demi-moules (2) articulés en rotation l'un par rapport à l'autre.

## Claims

1. A device for blow-molding or stretch blow-molding of containers starting from preforms made of thermoplastic, said device comprising a mold (1) in three parts, namely two half-molds (2) for the body of the container and a mold bottom (3) for the bottom of the container, the lower parts of the two half-molds (2) and the upper part of the mold bottom (3) comprising means (9, 10) which can fit together, in the closed position of the mold, to provide the axial rigidity of the mold in the presence of the blow-molding pressure, the two half-molds (2) being designed to be moved relative to one another, between an open position and a closed position, under the action of actuating means controlled by a fixed cam, this device comprising connection means between at least one half-mold (2) and/or said means for actuating said half-molds, on the one hand, and the mold bottom (3), on the other hand, so that the movement of the mold bottom (3) is controlled by the movement of at least one half-mold (2) and/or said actuating means such that:
- during opening of the mold, said actuating means cause said half-molds apart to begin to move until said fitting means (9, 10) are freed from one another, while said connection means remain inoperative and the mold bottom remains in its position, and then, while said actuating means continue to cause the two half-molds to move apart, the connection means become operational and move the mold bottom so as to separate it axially from said half-molds,
and such that
- during closing of the mold, said actuating means cause the two half-molds to begin to move towards one another at the same time as said connection means control the axial movement of the mold bottom until it reaches its completely raised position, and then, with said connection means becoming inoperative, said actuating means finish bringing the two half-molds together, with an engagement of the fitting means which mechanically and axially secures the two half-molds and the mold bottom,
**characterized in that** the connection means comprise a connecting rod (13) whose ends are provided with coupling means having three rotational degrees of freedom so as to connect it to the half-mold and/or to said means for actuating said half-molds and so as to connect it to the mold bottom, respectively,
and **in that** the connection of the rod (13) with the mold bottom (3) is arranged so as, during opening of the mold, to pivot freely under the entraining action of said half-mold and/or of said means for actuating said half-molds while the two half-molds are parting until a predetermined angular value (α) is obtained, and then to bear against an abutment attached to the mold bottom (3) when the half-molds (2) are parting at said angular value (α) and/or when said actuating means are in a position in which the half-molds are parting at said angular value (α), and finally to push the mold bottom (3) away axially when the two half-molds (2) complete their opening travel, and vice versa during closing of the mold.

2. The molding device as claimed in claim 1, **characterized in that** said connection means are interposed between one of the half-molds (2) and the mold bottom (3).

3. The molding device as claimed in claim 1 or 2, **characterized in that** the coupling means having three rotational degrees of freedom are spherical ball joint couplings (14, 15).

4. The molding device as claimed in claim 1 or 2, **characterized in that** the coupling means having three degrees of freedom comprise, for one of them, a spherical ball joint coupling and, for the other, a universal coupling.

5. The molding device as claimed in claim 3 or 4, **characterized in that** the lower end of the rod (13) is connected via the respective coupling (15) to a link (18) rotatably articulated on a radial arm (16) attached to the mold bottom, said abutment consisting of a portion (25) of said arm (16).

6. The molding device as claimed in claim 5, **characterized in that** the link (18) is articulated on the radial arm (16) by a pin (19) perpendicular to the axis of the mold.

7. The molding device as claimed in claim 5 or 6, **characterized in that** the link (18) is arranged in the form of a solid shoe to which the corresponding coupling (15) is connected.

8. The molding device as claimed in any one of claims 1 to 7, **characterized in that** elastic return means (20) are coupled to the mold bottom (3) to assist the axial movement of the mold bottom from its open position to its closed position.

9. The molding device as claimed in any one of claims 1 to 8, **characterized in that** the mold (1) is of the hinged type with the two half-molds (2) rotatably articulated relative to one another.

## Patentansprüche

1. Vorrichtung zum Formen von Behältern durch Blasen oder Streckblasen ausgehend von Rohlingen aus einem thermoplastischen Werkstoff, wobei die Vorrichtung eine Form (1) aus drei Teilen aufweist, nämlich zwei Halbformen (2) für den Körper des Behälters und einen Formboden (3) für den Boden des Behälters, wobei die unteren Teile der zwei Halbformen (2) und der obere Teil des Formbodens (3) Mittel (9, 10) aufweisen, die in der Schließposition der Form miteinander in Eingriff bringbar sind, um die axiale Steifigkeit der Form in Gegenwart des Blasdrucks sicherzustellen, wobei die zwei Halbformen (2) eingerichtet sind, um zueinander zwischen einer Öffnungsstellung und einer Schließstellung unter der Einwirkung von Betätigungsmitteln verschoben werden zu können, die von einem feststehenden Nocken gesteuert werden, wobei diese Vorrichtung Mittel zum Verbinden zwischen mindestens einer Halbform (2) und/oder den Betätigungsmitteln der Halbformen einerseits und dem Formboden (3) andererseits aufweist, so dass die Bewegung des Formbodens (3) von der Bewegung mindestens einer Halbform (2) und/oder des Betätigungsmittels gesteuert wird, so dass:
• beim Öffnen der Form die Betätigungsmittel den Anfang der gegenseitigen Abspreizbewegung der Halbformen bewirken, bis die miteinander in Eingriff bringbaren Mittel (9, 10) voneinander freigegeben sind, während die Verbindungsmittel inaktiv bleiben und der Formboden in seiner Position bleibt, und dann, während die Betätigungsmittel die zwei Halbformen weiter spreizen, die Verbindungsmittel aktiv werden und den Formboden bewegen, um ihn axial von den genannten Halbformen zu trennen,
und dass
• beim Schließen der Form die Betätigungsmittel den Anfang des Annäherns der zwei Halbformen zur gleichen Zeit bewirken, wobei die Verbindungsmittel die axiale Bewegung des Formbodens bis zu seiner vollständig angehobenen Stellung steuern, und die Verbindungsmittel dann inaktiv werden und die Betätigungsmittel das Annähern der zwei Halbformen aneinander abschließen, wobei die ineinander steckbaren Mittel eingreifen, wodurch die zwei Halbformen und der Formboden mechanisch axial steif miteinander verbunden sind,
**dadurch gekennzeichnet, dass** die Verbindungsmittel eine Verbindungsstange (13) aufweisen, deren Enden mit Kopplungsmitteln versehen sind, die drei Drehfreiheitsgrade haben, um sie jeweils mit der Halbform und/oder den Betätigungsmitteln der Halbformen und mit dem Formboden zu verbinden,
und **dadurch**, dass die Verbindung der Verbindungsstange (13) mit dem Formboden (3) vorgesehen ist, um beim Öffnen der Form frei unter dem Antrieb der Halbform und/oder der Betätigungsmittel der Halbformen zu schwenken, während sich die zwei Halbformen bis zu einem vorausbestimmten Winkelwert (α) öffnen, und um dann an einem Anschlag zur Auflage kommen, der fest mit dem Formboden (3) verbunden ist, während sich die Halbformen (2) um den Winkelwert (α) öffnen und/oder während die Betätigungsmittel in einer Stellung sind, bei der sich die Halbformen mit dem Winkelwert (α) öffnen, und schließlich den Formboden (3) zurückschieben, wenn die zwei Halbformen (2) ihren Öffnungsbewegung beenden, und umgekehrt beim Schließen der Form.

2. Formvorrichtung nach Anspruch 1, **dadurch gekennzeichnet, dass** die Verbindungsmittel zwischen einer der Halbformen (2) und dem Formboden (3) angeordnet sind.

3. Formvorrichtung nach Anspruch 1 oder 2, **dadurch gekennzeichnet, dass** die Kopplungsmittel mit drei Drehfreiheitsgraden Kopplungen (14, 15) mit Kugelgelenken sind.

4. Formvorrichtung nach Anspruch 1 oder 2, **dadurch gekennzeichnet, dass** die Kopplungsmittel mit drei Freiheitsgraden zum einen eine Kugelgelenkkopplung und zum andern eine Kardankopplung sind.

5. Formvorrichtung nach Anspruch 3 oder 4, **dadurch gekennzeichnet, dass** das untere Ende der Verbindungsstange (13) über die Kopplung (15) jeweils mit einem Schwingarm (18) verbunden ist, der in Drehung durch einen radialen Arm (16) angelenkt ist, der fest mit dem Formboden verbunden ist, wobei der Anschlag aus einem Abschnitt (25) des Arms (16) gebildet ist.

6. Formvorrichtung nach Anspruch 5, **dadurch gekennzeichnet, dass** der Schwingarm (18) durch den radialen Arm (16) in einer Achse (19) angelenkt ist, die zu der Achse der Form senkrecht ist.

7. Formvorrichtung nach Anspruch 5 oder 6, **dadurch gekennzeichnet, dass** der Schwingarm (18) in Form eines massiven Schuhs ausgebildet ist, mit dem die entsprechende Kopplung (15) verbunden ist.

8. Formvorrichtung nach einem der Ansprüche 1 bis 7, **dadurch gekennzeichnet, dass** elastische Rückholmittel (20) mit dem Formboden (3) gekoppelt sind, um die axiale Bewegung des Formbodens von seiner Öffnungsstellung bis zu seiner Schließstellung zu unterstützen.

9. Formvorrichtung nach einem der Ansprüche 1 bis 8, **dadurch gekennzeichnet, dass** die Form (1) des Portefeuille-Typs mit zwei Halbformen (2) ist, die zueinander drehbar angelenkt sind.
